# EUROPEAN PATENT SPECIFICATION

(11) **EP 1 512 673 B1**
(45) Date of publication and mention of the grant of the patent: **08.08.2007**
(21) Application number: 04255315.6
(22) Date of filing: 02.09.2004
(51) Int. Cl.: C04B 35/46

(54) **Method for manufacturing ceramic structure**
Verfahren zur Herstellung einer keramischen Struktur
Procédé pour la fabrication d'une structure en céramique

(30) Priority: 04.09.2003 JP 2003312884
(43) Date of publication of application: 09.03.2005
(73) Proprietor: Sony Corporation, Tokyo 141 (JP)
(72) Inventor: Ohashi, Yoshio, Shinagawa-ku Tokyo (JP); Uryu, Masaru, Shinagawa-ku Tokyo (JP)
(74) Representative: Leppard, Andrew John

(56) References cited:
- EP-A- 0 389 041
- JP-A- 2000 263 295
- US-B1- 6 364 966

## Description

### BACKGROUND OF THE INVENTION

### 1. Field of the Invention

The present invention relates to a method for manufacturing a ceramic structure. Embodiments of the present invention relate to a method of manufacturing a complicated ceramic structure such as a ceramic speaker diaphragm having a honeycomb structure, a ceramic filter, and a ceramic spring used at a high temperature, which are all composed of titanium oxide.

### 2. Description of the Related Art

A general process for manufacturing various ceramic structures includes the following procedure: A fine-grained ceramic is dispersed into a gas to form an aerosol. The resulting aerosol is discharged in a jet at high speeds to collide against a substrate disposed ahead of the jet, thus resulting in the deposition of a ceramic layer. That is, such an aerosol is accelerated from subsonic speeds to sonic speeds and then collides against a substrate composed of, for example, a metal, a ceramic, glass, or a plastic, thus resulting in a ceramic structure having a density of more than or comparable to a sintered body.

Silicon carbide (SiC) ceramics have excellent heat resistance, corrosion resistance, and wear resistance. Processes for manufacturing the silicon carbide ceramics include a reaction sintering step and a sintering step with densification aids. In the sintering step with densification aids, fine-grained SiC is mixed with boron; a boron compound and carbon; or carbon and a carbon compound and then the mixture is sintered at a temperature of around 2, 000°C.

Furthermore, a process for depositing ceramic such as silicon carbide (SiC) by chemical vapor deposition (CVD); and a process in which silicon carbide that is mixed with graphite and a resin is shaped and fired to entirely form a sintered body are proposed.

Japanese Unexamined Patent Application Publication No. 51-12130 discloses a speaker diaphragm having a titanium dioxide (TiO₂) layer formed on a surface of metallic titanium in an argon gas atmosphere containing an oxygen gas. Japanese Unexamined Patent Application Publication No. 2-152399 discloses a speaker diaphragm having a titanium dioxide layer with a thickness of 20 to 200 nm or at least 1 µm formed on a surface of metallic titanium by anodic oxidation. Such an acoustic diaphragm including a titanium oxide layer formed on metallic titanium has a stiffness higher than that of an acoustic diaphragm composed of metallic titanium alone, thus leading to excellent acoustic properties.

Japanese Unexamined Patent Application Publication No. 2001-145199 discloses a ceramic diaphragm composed of titanium oxide manufactured by subjecting a thin titanium plate that is in the form of a speaker diaphragm to heat treatment in an oxygen-containing atmosphere.

However, the above-described processes for manufacturing various ceramic structures require expensive equipment and complicated operations.

In Japanese Unexamined Patent Application Publication No. 2001-145199, a ceramic acoustic diaphragm can be easily produced. However, when a ceramic structure having a complicated shape such as a three-dimensional shaped ceramic speaker diaphragm having a honeycomb structure, a ceramic filter, and a ceramic spring used at a high temperature are manufactured, it is necessary to form the parts of the ceramic structure with a ceramic material and then to join the resulting parts to each other with, for example, an adhesive. Hence, there are problems in that the manufacturing process is relatively difficult and costly.

JP 2000-263295 discloses a method of weld-joining titanium materials in which an oxygen rich layer formed at the surface of the weld zone is subsequently reduced in thickness or removed to ensure the welded part remains bendable.

### SUMMARY OF THE INVENTION

Embodiments of the present invention seek to provide a method for manufacturing a complicated ceramic structure with relative ease and at a low cost.

According to a first aspect there is provided a method for manufacturing a ceramic structure, comprising the steps of forming metallic titanium into desired shapes to produce a plurality of titanium components; mechanically bringing the plurality of titanium components into contact with each other to produce a titanium structure; and oxidizing the plurality of titanium components by placing the titanium structure in a furnace and heat-treating the titanium structure, wherein the plurality of titanium components mechanically in contact with each other are joined together simultaneously by oxidation of the metallic titanium.

Consequently, according to embodiments of the present invention, a relatively complicated cosmic structure can be produced at a low cost.

Further particular and preferred aspects of the present invention are set out in the accompanying independent and dependent claims. Features of the dependent claims may be combined with features of the independent claims as appropriate, and in combination other than those explicity set out in the claims.

### BRIEF DESCRIPTION OF THE DRAWINGS

The present invention will be described further, by way of example only, with reference to preferred embodiments thereof as illustrated in the accompanying drawings, in which :
Fig 1 is a perpective view showing an example of a ceramic structure manufactured by a method for manufacturing a ceramic structure according to an embodiment of the present invention;
Fig. 2 is a schematic view showing an example of a heat treatment apparatus;
Fig. 3 is a schematic view showing another example of a heat treatment apparatus;
Fig. 4 is a schematic view showing another example of a heat treatment apparatus; and
Fig. 5 is an X-ray diffraction pattern of a titanium oxide specimen, which has a rectangular form, manufactured by a method for manufacturing a ceramic structure according to an embodiment of the present invention.

### DESCRIPTION OF THE PREFERRED EMBODIMENTS

A preferred embodiment for carrying out a method for manufacturing a ceramic structure of the present invention will now be described with reference to the drawings.

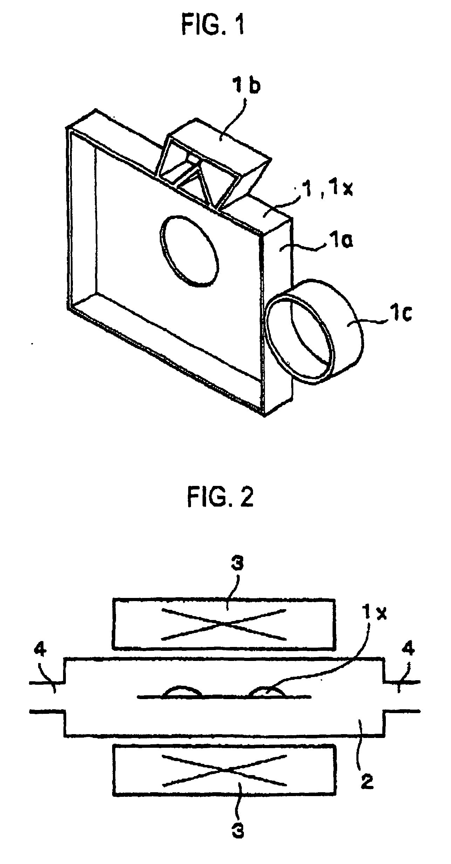

Fig. 1 shows a method for manufacturing a complicated ceramic structure, which has a desired shape, entirely composed of titanium oxide (TiO₂), according to this embodiment. Fig. 1 shows a shape for explanation, and this shape does not have a specific purpose.

Titanium oxide has excellent properties such as a smaller weight density, a higher modulus of elasticity, and stability at high-temperature compared with those of metallic titanium.

In this embodiment, metallic titanium is formed into predetermined shapes to produce titanium components 1a, 1b, and 1c as shown in Fig. 1.

A process for forming metallic titanium into a predetermined shape includes, for example, presswork. Metallic titanium can be formed into desired shapes due to its excellent processability, even when complicated shapes are required.

As shown in Fig. 1, these titanium components 1a, 1b, and 1c mechanically come into contact with each other to form a desired titanium structure 1x.

The titanium structure 1x is placed in the furnace of a heat treatment apparatus in order to be subjected to heat treatment. Then, the heat treatment conditions are adjusted.

This heat treatment can be performed, for example, in the following atmosphere: an oxygen-containing inert gas; an inert gas containing an oxygen gas and moisture; an oxygen-containing nitrogen gas; a nitrogen gas containing an oxygen gas and moisture; an oxygen gas alone; a moisture-containing oxygen gas; an ozone gas alone; a moisture-containing inert gas; a moisture-containing nitrogen gas; and air.

When the heat treatment is performed in air, for example, as shown in Fig. 2, a heat treatment apparatus including a furnace 2 in which a titanium structure 1x is placed, a heater 3 for heating the furnace 2, and ventilating openings 4 through which air passes can be used. The furnace 2 may be enclosed, or air may pass through the furnace 2.

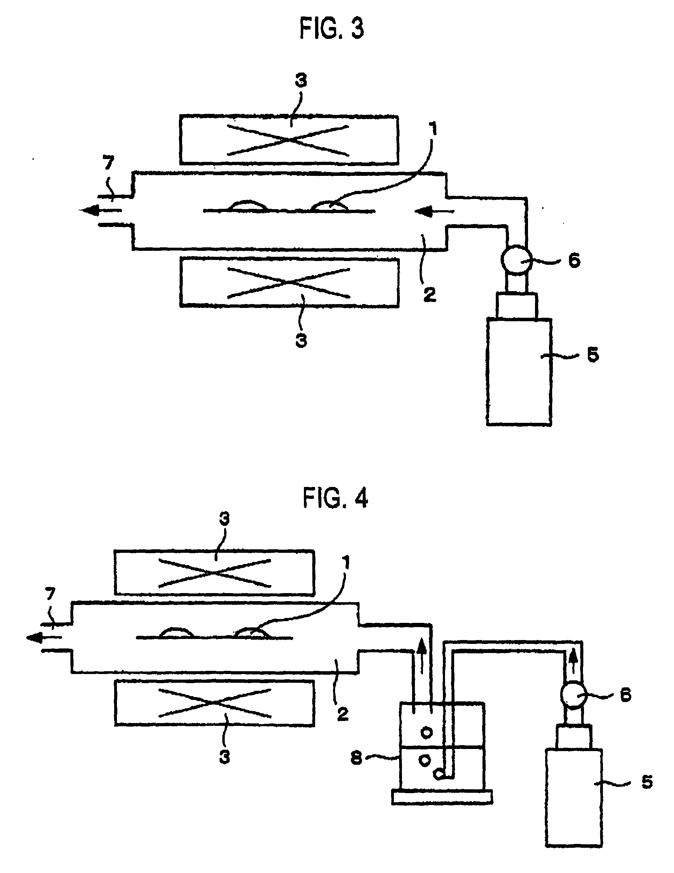

When the heat treatment is performed in an atmosphere consisting of an oxygen gas; an oxygen-containing inert gas; an oxygen-containing nitrogen gas; or an ozone gas (hereinafter, these gases are referred to as "oxygen-containing gas"), for example, as shown in Fig. 3, a heat treatment apparatus including the furnace 2 in which a titanium structure 1x is placed, the heater 3 for heating the furnace 2, a tank 5 for storing an oxygen-containing gas, a valve 6 for controlling the supply of the oxygen-containing gas, and an outlet 7 for exhausting the oxygen-containing gas can be used.

The titanium structure 1x is placed in the furnace 2 of the heat treatment apparatus, and then the valve 6 is opened to supply an oxygen-containing gas from the tank 5 to the furnace 2, thus substituting the oxygen-containing gas for air in the furnace 2. After the substitution, the supply of the oxygen-containing gas into the furnace 2 may be maintained or stopped.

When the heat treatment is performed in an atmosphere consisting of an inert gas containing an oxygen gas and moisture; a nitrogen gas containing an oxygen gas and moisture; a moisture-containing oxygen gas; a moisture-containing inert gas; or a moisture-containing nitrogen gas (hereinafter, these gases are referred to as "moisture-containing gas"), for example, as shown in Fig. 4, a heat treatment apparatus including the furnace 2 in which a titanium structure 1x is placed, the heater 3 for heating the furnace 2, a tank 5 for storing an oxygen-containing gas, a valve 6 for controlling the supply of the oxygen-containing gas, a bubbler 8 for adding moisture to the gas supplied from the tank 5 to obtain a moisture-containing gas, and an outlet 7 for exhausting the moisture-containing gas can be used. In this heat treatment apparatus, moisture can be easily added to a gas stored in the tank 5 by passing the gas through the bubbler 8.

The titanium structure 1x is placed in the furnace 2 of the heat treatment apparatus, and then the valve 6 is opened to supply a moisture-containing gas from the tank 5 to the furnace 2 via the bubbler 8, thus substituting the moisture-containing gas for air in the furnace 2. After the substitution, the supply of the moisture-containing gas into the furnace 2 may be maintained or stopped.

Next, the temperature in the furnace 2 is increased to a temperature required for the heat treatment with the heater 3. The heating rate is preferably controlled such that the titanium structure 1x is not distorted or damaged.

The furnace 2 is maintained at a predetermined temperature to subject the titanium structure 1x to heat treatment. Consequently, the titanium structure 1x is entirely oxidized to form titanium oxide.

The heat treatment is performed at 800°C or more. When the heat treatment is performed at 880°C, which is the transformation temperature of titanium, a pale-yellow colored titanium oxide is produced with many pores that can be observed with an electron microscope. Such a titanium oxide has excellent stiffness due to its low weight density and a high modulus of elasticity. When the titanium structure 1x is subjected to the heat treatment at less than 880°C, a gray colored titanium oxide having an unsatisfactorily reduced weight density and unsatisfactorily increased stiffness can be produced, the gray colored titanium oxide having a higher density than that of the pale-yellow colored titanium oxide.

After the heat treatment, the furnace 2 is cooled to obtain a ceramic structure 1 entirely composed of titanium oxide. The cooling may be natural cooling or forced cooling with, for example, cooling water, provided that the ceramic structure 1 is not distorted or damaged.

Since this ceramic structure 1 is entirely composed of titanium oxide, sufficient excellent intrinsic properties of titanium oxide appear. As a result, the ceramic structure 1 has excellent properties such as high stiffness and stability when using at high temperatures.

Titanium oxide has excellent properties as a structural material; however, it is difficult to form in a complicated shape. A method of the present invention is performed as follows: Metallic titanium having excellent processability is formed into desired shapes to produce titanium components 1a, 1b, and 1c. These titanium components 1a, 1b, and 1c mechanically come into contact with each other to form a titanium structure 1x. When this titanium structure 1x is oxidized to produce a ceramic structure 1, at the same time, the mechanically contacted portions among these titanium components 1a, 1b, and 1c are joined to each other by intermolecular bonding. That is, these titanium components 1a, 1b, and 1c are joined to each other simultaneously by oxidation to easily produce the complicated ceramic structure 1 entirely composed of titanium oxide. Furthermore, since many products can be simultaneously oxidized without the need for an expensive thin-film forming apparatus such as a chemical vapor deposition (CVD) apparatus, the ceramic structure 1 entirely composed of titanium oxide can be manufactured at a low cost.

Ceramic structures were manufactured by a method for manufacturing a ceramic structure according to embodiments of the present invention.

### [Sample 1]

Two kinds of titanium structures composed of metallic titanium were prepared. A titanium plate used for one of the titanium structures had a thickness of 20 µm and another one had a thickness of 30 µm. Each of the titanium structures was formed so as to produce a desired ceramic structure after heat treatment. A rectangular metallic titanium specimen that had a thickness of 20 µm was also prepared for measurement in addition to the two titanium structures.

These two titanium structures and a metallic titanium specimen having a rectangular form were placed in a furnace of a heat treatment apparatus as shown in Fig. 2, and the temperature in the furnace was increased. The furnace may be enclosed, or air may pass through the furnace. The temperature in the furnace was increased from 25°C to 900°C, which exceeded the transformation temperature of metallic titanium, over a period of 90 min.

The temperature in the furnace was maintained at 900°C until the titanium structures were completely oxidized to produce titanium oxide structures. The titanium plate having a thickness of 20 µm required at least 30-min retention time and the titanium plate having a thickness of 30 µm required at least 60-min retention time.

The furnace was naturally cooled to produce ceramic structures of sample 1 entirely composed of titanium oxide and a titanium oxide specimen having a rectangular form.

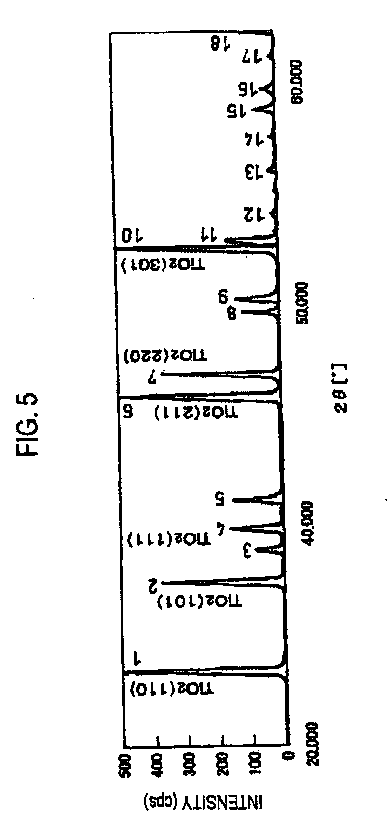

The resulting ceramic structures and the titanium oxide specimen having a rectangular form were pale yellow. The mechanically contacted portions were completely oxidized and strongly joined to each other. Fig. 5 is the X-ray diffraction pattern of the titanium oxide specimen having a rectangular form. The observed diffraction peaks indicated that the resulting substance was titanium oxide with a rutile structure.

The elongation percentage of the titanium oxide specimen having a rectangular form after the heat treatment to the metallic titanium specimen having a rectangular form before the heat treatment was 1.2%.

### [Sample 2]

Ceramic structures and a titanium oxide specimen having a rectangular form were manufactured as in Sample 1, but the heat treatment apparatus shown in Fig. 3 was used, and the heat treatment was performed in an atmosphere consisting of an oxygen-containing gas. The resulting acoustic diaphragms and the titanium oxide specimen were the same pale yellow as Sample 1.

### [Sample 3]

Ceramic structures and a titanium oxide specimen having a rectangular form were manufactured as in Sample 1, but the heat treatment apparatus as shown in Fig. 4 was used, and the heat treatment was performed in an atmosphere consisting of a moisture-containing gas. The resulting acoustic diaphragms and the titanium oxide specimen were the same pale yellow as Sample 1.

### [Sample 4]

Ceramic structures and titanium oxide specimen having a rectangular form were manufactured as in Sample 1, but the heat treatment was performed at 850°C. The resulting acoustic diaphragms and the titanium oxide specimen were gray.

In this case, the mechanically contacted portions were completely oxidized and strongly joined to each other.

The thickness, the weight density, and the modulus of elasticity of the resulting titanium oxide specimens each having a rectangular form and the metallic titanium specimens each having a rectangular form before the heat treatment of Samples 1 to 4 were evaluated. Table 1 shows the results. The results obtained from Samples 2 and 3 were omitted because the results were the same as those in Sample 1.

**Table 1**

| | Temperature of heat treatment (°C) | Thickness (mm) | Weight density (kg/m³) | Modulus of elasticity (GPa) |
|---|---|---|---|---|
| Sample 1 | 900 | 0.04 | 3600 | 270 |
| Sample 4 | 800 | 0.04 | 4196 | 240 |
| Sample before heat treatment | - | 0.02 | 4500 | 110 |

As is evident from Table 1, Sample 1 had a thickness of about two times and had a modulus of elasticity above two times those of the sample before the heat treatment. The weight density of Sample 1 was reduced. In this way, since Sample 1 was subjected to heat treatment at a temperature above the transformation temperature of metallic titanium, Sample 1 represented excellent intrinsic properties of titanium oxide.

The properties of both weight density and modulus of elasticity of Sample 4 were poor compared with those of Sample 1. Since Sample 4 was subjected to heat treatment at a temperature of 850°C, which is below the transformation temperature of metallic titanium, Sample 4 was not able to achieve excellent intrinsic properties of titanium oxide. However, Sample 4 represented excellent properties compared with those of the sample before heat treatment.

Among Samples 1 to 3, the ceramic structures of Sample 1 subjected to heat treatment in air were able to be manufactured at a lowest cost.

## Claims

1. A method for manufacturing a ceramic structure, comprising the steps of:
forming metallic titanium into desired shapes to produce a plurality of titanium components (1a; 1b; 1c) ;
mechanically bringing the plurality of titanium components into contact with each other to produce a titanium structure (1x); and
oxidizing the plurality of titanium components by placing the titanium structure in a furnace and heat-treating the titanium structure, wherein the plurality of titanium components mechanically in contact with each other are joined together simultaneously by oxidation of the metallic titanium.

2. The method for manufacturing a ceramic structure according to Claim 1, wherein the heat treatment in the oxidizing step is performed at a temperature of 800°C or more.

## Patentansprüche

1. Verfahren zur Herstellung einer keramischen Anordnung, umfassend die Schritte:
Formen von metallischem Titan in gewünschte Formen, um mehrere Titankomponenten (1a; 1b; 1c) zu erzeugen;
Mechanisches In-Kontakt-Bringen der mehreren Titankomponenten miteinander, um eine Titananordnung (1x) zu erzeugen; und
Oxidieren der mehreren Titankomponenten durch Anordnung der Titananordnung in einem Ofen und Wärmebehandeln der Titananordnung, worin die mehreren, mechanisch in Kontakt miteinander stehenden Titankomponenten durch die Oxidation des metallischen Titans simultan miteinander verbunden werden.

2. Verfahren zur Herstellung einer keramischen Anordnung gemäß Anspruch 1, worin die Wärmebehandlung in dem Oxidierschritt bei einer Temperatur von 800°C oder höher durchgeführt wird.

## Revendications

1. Procédé de fabrication d'une structure en céramique, comprenant les étapes consistant à:
former du titane métallique en des formes souhaitées pour produire une pluralité de composants en titane (1a; 1b ; 1c) ;
mettre la pluralité de composants en titane mécaniquement au contact les uns les autres pour produire une structure en titane (1 x) ; et
oxyder la pluralité de composants en titane en plaçant la structure en titane dans un fourneau et en traitant à la chaleur la structure en titane, dans lequel la pluralité de composants en titane mécaniquement au contact les uns les autres sont joints ensemble simultanément par oxydation du titane métallique.

2. Procédé de fabrication d'une structure en céramique selon la revendication 1, dans lequel le traitement à la chaleur dans l'étape d'oxydation est effectué à une température de 800 °C ou supérieure.
